(19) Europäisches Patentamt

European Patent Office

Office européen des brevets

(11) Veröffentlichungsnummer: **0 268 761 B1**

(12) **EUROPÄISCHE PATENTSCHRIFT**

(45) Veröffentlichungstag der Patentschrift: **03.06.92**

(21) Anmeldenummer: **87112922.7**

(22) Anmeldetag: **04.09.87**

(51) Int. Cl.⁵: **B01D 25/26**, F02M 37/22

(54) **Flüssigkeitsfilter, insbesondere für Kraftstoffe.**

(30) Priorität: **21.10.86 DE 3635728**

(43) Veröffentlichungstag der Anmeldung:
**01.06.88 Patentblatt 88/22**

(45) Bekanntmachung des Hinweises auf die
Patenterteilung:
**03.06.92 Patentblatt 92/23**

(84) Benannte Vertragsstaaten:
**DE FR GB IT**

(56) Entgegenhaltungen:
**BE-A- 505 358
CH-A- 301 790
DE-C- 715 197
GB-A- 717 656
US-A- 2 143 270**

(73) Patentinhaber: **ROBERT BOSCH GMBH
Postfach 30 02 20
W-7000 Stuttgart 30(DE)**

(72) Erfinder: **Bosch, Franz-Ulrich, Dipl.-Ing.
Eduard-Steinle-Strasse 36
W-7000 Stuttgart 75(DE)**
Erfinder: **Füssner, Paul, Dipl.-Ing.
Sommerhofenstrasse 167
W-7032 Sindelfingen(DE)**
Erfinder: **Haas, Wolfgang
Bebelstrasse 29/3
W-7000 Stuttgart 1(DE)**
Erfinder: **Hogh, Josef
Hainbuchenstrasse 23
W-7050 Waiblingen(DE)**
Erfinder: **Mootz, Friedrich, Ing. grad.
Gerokstrasse 10
W-7140 Ludwigsburg(DE)**
Erfinder: **Müller, Willi
Wiesenstrasse 38
W-7257 Sulz-Sigmarswangen(DE)**
Erfinder: **Scholz, Erich
Adenauerstrasse 34
W-7303 Neuhausen/F(DE)**
Erfinder: **Straubel, Max, Dr.
Ontariostrasse 30B
W-7000 Stuttgart 61(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung geht aus von einem Flüssigkeitsfilter nach der Gattung des Hauptanspruchs. Es ist schon ein solches Flüssigkeitsfilter aus der DE-A-17 61 498 bekannt, bei dem in einem Gehäuse ein Filtereinsatz angeordnet ist, der aus kreisringförmigen Filterscheiben, äußeren und inneren Distanzscheiben und aus Stützscheiben besteht. Die äußeren Distanzscheiben sind hier als profilierte Ringe ausgebildet, die sich an ihrem äußeren Ende gabeln und zur Abstützung in einer Profildichtung besonders geformt sind, wobei in den aufgebogenen Rändern Durchbrüche für die Flüssigkeitsströmung vorgesehen sind. Während die äußere Abstandsscheibe mehr als elastisches Blechteil ausgebildet ist, ist die innere Abstandsscheibe eher als massiver Ring aufgebaut, so daß die Distanzscheiben Bauelemente mit verschiedenen Bauarten aufweisen. Ferner ist eine relativ aufwendige U-förmige Profildichtung aus Gummi vorgesehen, welche die äußeren Ränder zweier Stützscheiben umgreift. Der axiale Anpreßdruck für die aufeinander gestapelten Scheiben wird durch eine kostspielige Schraubverbindung erzeugt, wozu ein zusätzliches inneres Stützrohr erforderlich ist. Bei der Herstellung dieses Filtereinsatzes ist zwar in vorteilhafter Weise kein kostspieliger und zeitraubender Klebevorgang notwendig, doch hat dieser Filtereinsatz den Nachteil, daß er äußerst aufwendig und damit teuer baut. Die Vielzahl der Bauelemente erschwert auch die Herstellung des Filters.

Ferner ist aus der DE-A-748 206 ein Flüssigkeitsfilter bekannt, bei dem der Filtereinsatz nach Art eines Zellenfilters aufgebaut ist. Bei diesem Filtereinsatz ist jeweils eine flache, ebene Filterpapierscheibe zwischen zwei angrenzenden Leitscheiben angeordnet, die jeweils aus zwei konzentrisch zueinander verlaufenden, durch Stege miteinander verbundenen Ringen bestehen. Dabei weist die eine angrenzende Leitscheibe im äußeren Ring und die andere angrenzende Leitscheibe im inneren Ring jeweils Durchbrüche auf, so daß die Filterpapierscheibe axial durchströmt werden kann. Trotz seiner einfachen und kompakten Bauweise hat dieser Filtereinsatz den Nachteil, daß die ebene Filterpapierscheibe an den Stellen, wo sie die Durchbrüche der benachbarten Leitscheiben überspannt, infolge von Quellen im Betrieb oder durch Deformation so verformt werden kann, daß Leckverbindungen von der Schmutz auf die Reinseite entstehen. Weiterhin ist von Nachteil, daß durch die Stege wertvolle Filterfläche verloren geht. Da durch die Gefahr der Leckstellenbildung die Anzahl der Durchbrüche in den Leitscheiben begrenzt werden soll, ist der Durchflußwiderstand des Filtereinsatzes relativ hoch. Auch erfordern die durchbrochenen Leitscheiben erhöhte Vorsicht bei ihrer Montage.

Die Entgegenhaltung CH-A-301 790, Müller, lehrt ein Flüssigkeitsfilter, bei dem die einzelnen Filterscheiben und die zugehörigen Abstandsringe kein selbsttragendes Bauelement bilden. Vielmehr werden diese Bauelemente durch ein gelochtes, inneres Stützrohr und ein äußeres Stützrohr zentriert und sind damit lose aufeinander stapelbar. Dabei werden beide Stützrohre noch durch Endscheiben relativ zueinander gehalten. Die Abstandsringe sind hierbei in ganz besonderer Weise ausgebildet, indem sie jeweils einen U-förmigen Querschnitt aufweisen und elastisch sind, wozu als geeignetes Material für diese Abstandringe nach Müller Stahl oder Messing verwendbar ist. Diese Abstandsringe mit U-förmigem Querschnitt und lochförmigen Durchgängen haben zudem an ihren beiden außenliegenden Enden umgebogene Ränder, so daß die profilierte Form der Abstandsringe aus metallischem Werkstoff schwer und teuer herstellbar ist. Beim Zusammenbau werden diese federnden Schenkel des U-förmigen Querschnitts zusammengedrückt, wobei dieser Druck von umgebogenen Rändern der beiden Stützrohre aufgefangen werden muß. Der so vorbereitete Filtereinsatz aus Filterscheiben, Abstandsringen, Endscheiben und Stützrohre wird zusätzlich über zwei O-Ringe im Gehäuse abgedichtet. Demnach lehrt Müller eine relativ aufwendige und teuere Bauart, die sich zudem wegen der Vielzahl von verschiedenen Bauelementen weniger für eine Massenfabrikation eignet. Insbesondere lehrt Müller keine vergleichbar einfachen Abstandsringe aus nicht metallischem Material, die durch einfaches Zusammendrücken mit den Filterpapierscheiben zu einem selbsttragenden Bauelement führen.

Die GB-A-717 656 verwendet zusätzliche Verschraubungen zum Zusammenspannen der Filterscheiben, wobei einerseits sich gegenseitig zentrierende Abstandsringe bzw. andererseits ein Mittelrohr die Zentrierung übernimmt.

Das erfindungsgemäße Flüssigkeitsfilter mit den kennzeichnenden Merkmalen des Hauptanspruchs hat demgegenüber den Vorteil, daß es eine Bauart ohne Verwendung von Klebstoff ermöglicht, eine optimale Filterfläche erlaubt und kostengünstig herstellbar ist. Der Filtereinsatz läßt sich mit umweltfreundlichen Fertigungsverfahren herstellen, wobei spezielle Weichdichtungen nicht benötigt werden.

Durch die Bauweise des Filtereinsatzes sind keine zusätzlichen inneren oder äußeren Stützrohre erforderlich; der notwendige axiale Anpreßdruck läßt sich durch einfache Federelemente erreichen. Das Filter eignet sich besonders für eine kostensenkende Massenfabrikation.

Durch die in den Unteransprüchen aufgeführten Maßnahmen sind vorteilhafte Weiterbildungen und Verbesserungen des im Hauptanspruch angegebenen Flüssigkeitsfilters möglich.

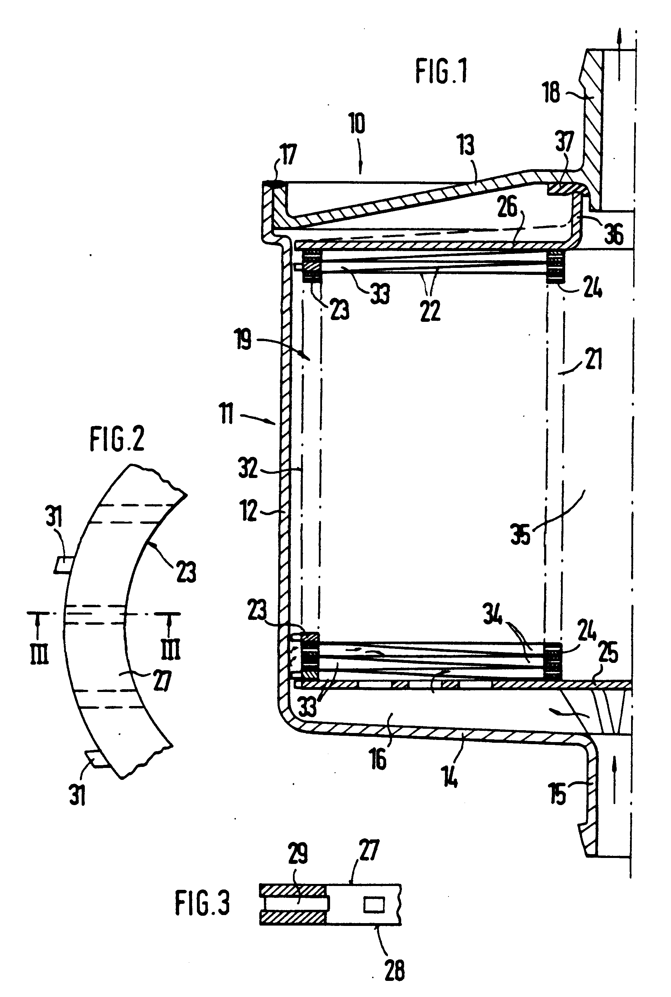

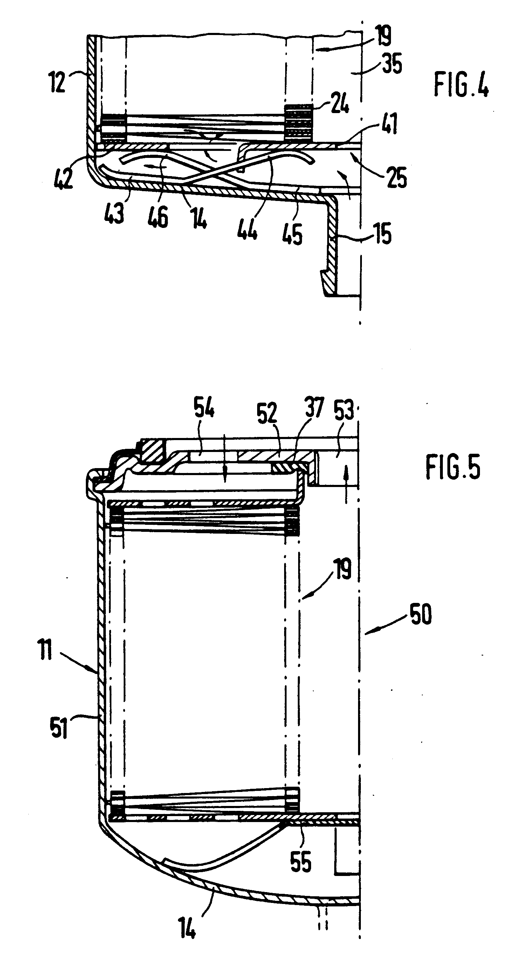

Drei Ausführungsbeispiele der Erfindung sind in der Zeichnung dargestellt und in der nachfolgenden Beschreibung näher erläutert. Es zeigen Figur 1 einen Längsschnitt durch eine Hälfte eines ersten Flüssigkeitsfilters, Figur 2 eine Draufsicht auf einen Teil eines äußeren Abstandsringes in vergrößertem Maßstab, Figur 3 einen Schnitt nach III-III in Figur 2, Figur 4 einen teilweisen Längsschnitt durch ein zweites Flüssigkeitsfilter und Figur 5 einen Längsschnitt durch eine Hälfte eines dritten Flüssigkeitsfilters in Boxausführung.

Beschreibung der Ausführungsbeispiele

Die Figur 1 zeigt einen Flüssigkeitfilter 10, dessen Gehäuse 11 aus Aluminium aus einem becherförmigen Gehäusetopf 12 und einem Gehäusedeckel 13 besteht. An einem Boden 14 des Gehäusetopfes 12 sind eine zentrische Zulauföffnung 15 für einen Zulauf sowie in das Gehäuseinnere ragende Stützrippen 16 angeordnet. Der mit dem Gehäusetopf 12 durch eine Schweißnaht 17 fest und dicht verbundene Gehäusedeckel 13 weist eine zentrisch angeordnete, der Reinseite zugeordneten Ablauföffnung 18 für den Ablauf auf.

Das Gehäuse 11 nimmt in seinem Innern einen Filtereinsatz 19 auf, der nach Art eines Zellenfilters aufgebaut ist. Der Filtereinsatz besteht aus einem Filterscheibenpaket 21, das im einzelnen aus einer Vielzahl von ringförmigen, flachen Filterscheiben 22, aus äußeren Abstandsringen 23 und aus inneren Abstandsringen 24 besteht, welche übereinander gestapelt sind und zwischen einer starren unteren Endplatte 25 und einer starren oberen Endplatte 26 angeordnet sind.

Wie die Figur 2 in Verbindung mit Figur 3 näher zeigen, welche einen Teil eines äußeren Abstandsringes 23 in Draufsicht bzw. im Schnitt darstellen, weist der Abstandsring 23 zwei auf entgegengesetzten Seiten liegende, ebene und glatte Anlageflächen 27, 28 auf. Zwischen diesen Anlageflächen 27, 28 verlaufen den Druckmittelstrom durchlassende, lochartige, im Querschnitt rechteckige Durchgänge 29, die im wesentlichen radial verlaufen. Auf diese Weise sind die Anlageflächen 27 und 28 längs des gesamten Umfanges des Abstandsringes 23 ohne Unterbrechung und durchgehend mit glatter Oberfläche ausgebildet. Wie Figur 3 näher zeigt, weist der Querschnitt des äußeren Abstandsringes 23 eine rechteckige Form auf, dessen Breite etwa doppelt so groß wie dessen Dicke. Der freie Querschnitt der lochartigen Durchgänge 29 ist dazu passend so groß gewählt, daß bei dem im Filtereinsatz 19 auftretenden axialen Druck die ebenen Anlageflächen 27, 28 sich nicht nennenswert verformen und somit eine einwandfreie Abdichtung zwischen Schmutzseite und Reinseite bestehen bleibt An den äußeren Abstandsringen 23 sind radial nach außen ragende Nasen 31 angeformt, welche das Filterscheibenpaket 21 im Gehäusetopf 12 zentrieren und zugleich Druckmittelkanäle bilden, über welche der zu reinigende Kraftstoff zu den Durchgängen 29 strömen kann, die zu einer Mantelfläche 32 des Filtereinsatzes 19 hin offen sind.

Die inneren Abstandsringe 24 sind in gleicher Weise aufgebaut wie die äußeren Abstandsringe 23, haben lediglich einen kleineren Durchmesser und benötigen keine Nasen 31 zur Abstandshalterung.

Die Filterscheiben 22 sind kreisringförmig ausgebildet, bestehen aus einem geeigneten Filterpapier und sind mit den Abstandsringen 23, 24 so aufeinandergestapelt, daß die Ränder am inneren und äußeren Umfang von zwei aneinander grenzenden Filterscheiben entweder unmittelbar aneinander liegen oder zwischen sich einen Abstandsring aufnehmen. Auf diese Weise werden im Filtereinsatz 19 über die äußeren Abstandsringe 23 zur Mantelfläche 32 hin geöffnete Zellen 33 gebildet, welche der Schmutzseite 15 zugeordnet sind. Gleichzeitig werden dadurch dazwischenliegende Zellen 34 gebildet, welche über die inneren Abstandsringe 24 mit einem zentral liegenden Ablaufkanal 35 und weiter mit dem Anschlußstutzen 18 für den Ablauf verbunden sind.

Bei der Herstellung des Filtereinsatzes 19 werden die Filterscheiben 22 mit den Abstandsringen 23, 24 zwischen den starren Endplatten 25 und 26 nach dem Übereinanderschichten so stark zusammengedrückt, daß zwischen den einzelnen Filterscheiben 22 und Abstandsringen 23, 24 eine dichte und ausreichend feste Verbindung besteht, so daß das Filterscheibenpaket 21 ohne jeglichen Zusatz von Klebstoff ein selbsttragendes Bauelement bildet. Durch die gegenüber Druck stabilen Abstandringe 23, 24 mit ihren durchgehend glatten Anlageflächen 27, 28 ist eine solche Verbindung möglich, ohne daß hierbei störende Deformationen auftreten, welche zu Leckverbindungen zwischen Schmutz- und Reinseite führen könnten. Der Filtereinsatz 19 läßt sich deswegen in sehr umweltfreundlicher Weise herstellen. Da er zudem keine äußeren oder inneren Stützrohre erfordert, ermöglicht er eine kostengünstige Massenfertigung. Die Abstandringe 23, 24 können dabei aus Papier, Kunststoff oder einem anderen geeigneten Material bestehen. Auch für die Filterscheiben kann anstelle des Filterpapiers ein anderes, geeignetes, dünnwandiges Filtermaterial verwendet werden.

Der Filtereinsatz 19 ist im Gehäuse 11 mit ausreichendem axialen Anpreßdruck eingespannt. Er liegt dabei mit seiner unteren, starren Endplatte 25 auf den Stützrippen 16 auf, während sich die obere starre Endplatte 26 über einen angeformten Rohrstutzen 36 und einen zugehörigen Dichtring 37 im Gehäuse 11 abstützt.

Die Wirkungsweise des Flüssigkeitsfilters 10 gleicht derjenigen von üblichen Zellenfiltern. Der über den Anschlußstutzen 15 zufließende, zu reinigende Kraftstoff fließt zwischen den Stützrippen 16 hindurch in den zwischen Innenwand des Gehäusetopfes 12 und Mantelfläche 32 des Filtereinsatzes 19 bestehenden Ringraum. Über die radialen Durchgänge 29 in den äußeren Abstandringen 23 gelangt der Kraftstoff in die der Schmutzseite zugeordneten Zellen 33. Anschließend durchströmt er axial durch die Filterscheiben 22 in die Zellen 34 und gelangt gereinigt über die Durchgänge 29 in den inneren Abstandsringen 24 in den Ablaufkanal 35 und weiter zum Anschlußstutzen 18 für den Ablauf. Zahlreiche Durchgänge 29 in den äußeren und inneren Abstandsringen 23, 24 halten dabei den Durchflußwiderstand relativ niedrig. Durch die zwischen den äußeren und inneren Abstandsringen 23, 24 sich freitragend erstreckenden Filterpapierscheiben 22 kann die Größe der wirksamen Filterfläche optimal ausgelegt und zugleich der Durchflußwiderstand insgesamt niedrig gehalten werden.

Die Figur 4 zeigt einen teilweisen Längsschnitt durch ein zweites Flüssigkeitsfilter 40, das sich vom ersten Flüssigkeitsfilter 10 nach Figur 1 wie folgt unterscheidet, wobei für gleiche Bauelemente gleiche Bezugszeichen verwendet werden.

Beim zweiten Flüssigkeitsfilter ist die starre untere Endplatte 25 zweigeteilt und besteht aus einem zentral angeordneten Teller 41 und einem in der gleichen radialen Ebene angeordneten Außenring 42. Der Teller 41 liegt an den inneren Abstandsringen 24 an und sperrt zugleich den Ablaufkanal 35 gegenüber der Schmutzseite in der Zulauföffnung 15 für den Zulauf ab. Der Boden 14 im Gehäusetopf 12 weist keine Stutzrippen auf, so daß eine an ihm anliegende erste Ringfeder 43 mit ihren Armen 44 das Teller 41 im Bereich der inneren Abstandsringe 24 axial belastet. Eine am Boden 14 anliegende zweite Ringfeder 45 drückt mit ihren Federarmen 46 den Außenring 42 in axialer Richtung gegen die äußeren Abstandsringe 23. Die beiden Ringfedern 43, 45 sorgen somit für einen ausreichenden axialen Anpreßdruck des Filtereinsatzes 19 im Gehäuse 11 und ermöglichen zudem einen ausreichenden Durchflußquerschnitt für den zufließenden Kraftstoffstrom.

Die Figur 5 zeigt einen Längsschnitt durch eine Hälfte eines dritten Flüssigkeitsfilters 50, das sich von dem ersten Flüssigkeitsfilter 10 in Leitungsfilterbauart vor allem durch seine Ausführung als Filterbox unterscheidet. Im übrigen werden gleiche Bauelemente wie in Figur 1 mit gleichen Bezugszeichen versehen.

Beim dritten Flüssigkeitsfilter 50 besteht das Gehäuse 11 aus einem geschlossenen becherförmigen Gehäusetopf 51 und einem zugehörigen Gehäusedeckel 52, in dem neben dem zentral liegenden Anschlußstutzen 53 für den Ablauf in an sich bekannter Weise mehrere Öffnungen 54 für den Zulauf des Kraftstoffs angeordnet sind. Der baugleiche Filtereinsatz 19 wird von einer am Boden 14 sich abstützenden Federscheibe axial gegen den Dichtring 37 gedrückt.

Die Wirkungsweise des Flüssigkeitsfilters 50 im Hinblick auf den als Zellenfilter ausgebildeten Filtereinsatz 19 entspricht derjenigen des ersten Flüssigkeitsfilters 10.

Selbstverständlich sind Änderungen an den gezeigten Ausführungsformen möglich, ohne vom Gedanken der Erfindung abzuweichen. Der in Figur 1 bzw. 5 dargestellte Filtereinsatz 19 stellt eine besonders vorteilhafte Kombination von Baumerkmalen dar, da er einen einfach und kostengünstig herstellbaren und handhabbaren Filtereinsatz ermöglicht, bei dem die Gefahr von Leckverbindungen zwischen Schmutz-und Reinseite infolge quellender Klebeverbindung insbesondere bei aggressiven Kraftstoffen stark verringert ist. Auch ist die vorteilhafte Ausbildung des Filtereinsatzes als selbsttragendes Gebilde ohne Verwendung von Klebstoff auch dann möglich, wenn anstelle der kreisrunden Form die Umfangsform eines Vielecks gewählt wird, wobei die Zahl der Ecken insbesondere vier bis acht betragen kann. Auch ist die erfindungsgemäße Bauart des Filtereinsatzes 19 bei verschiedenen Gehäusebauformen anwendbar. Anstelle des verwendeten Gehäuses aus Aluminium könnte auch ein solches aus Kunststoff treten, dessen Ränder z.B. durch Ultraschall verschweißt werden.

Bei dem Filter 40 nach Figur 4 läßt sich anstelle der zweiteiligen Endplatte auch eine einteilige Ringfeder verwenden, die z.B. insgesamt acht federnde Arme aufweist, von denen vier mit ihrem innenliegenden Ende und die anderen vier Arme mit ihrem außenliegenden Ende so aufgebogen sind, daß sie den Filtereinsatz federnd abstützen.

**Patentansprüche**

1. Flüssigkeitsfilter, insbesondere für Kraftstoffe, mit einem in einem Gehäuse (11) angeordneten Filtereinsatz (19), bei dem einzelne Filterscheiben (22) durch abwechselndes Zwischenlegen eines äußeren (23) bzw. eines inneren Abstandsringes (24) stapelförmig nach Art eines Zellenfilters zusammengefügt sind und bei dem an beiden Enden des Filterscheibenpakets angeordnete starre Endplatten (25, 26) liegen, wobei an der äußeren Mantelfläche (32) des Filterscheibenpakets sich mehrere mit einer Zulauföffnung (15) kommunizierende Durchgänge (29) befinden, die durch die Filterscheiben (22) und die inneren Abstandsringe (24) hindurch mit einem zentralen, in eine Ablauföffnung (18) mündenden Ablaufkanal (35) verbunden sind und mit einer die Filterscheiben (22) und die Abstandsringe (23, 24) in axialer Richtung zusammenhaltenden Vorrichtung, und bei welchen Abstandsringen (23, 24) die auf einander entgegengesetzten Seiten liegenden zwei Anlageflächen (27, 28) ohne Unterbrechung durchgehend mit glatter Oberfläche und die Durchgänge (29) lochartig ausgebildet sind, und bei dem die äußeren Abstandsringe (23) und die inneren Abstandsringe (24) gleich dick sind und die Filterscheiben (22) aus dünnwandigem Filtermaterial freitragend zwischen den äußeren und den inneren Abstandsringen (23, 24) mit ihrem äußeren bzw. inneren Rändern eingespannt sind, dadurch gekennzeichnet, daß die inneren und äußeren Abstandsringe (23, 24) jeweils einen rechteckigen Querschnitt aufweisen, von dem die längeren Seiten den Anlageflächen (27, 28) zugeordnet sind, daß die Abstandsringe (23 24) aus einem nichtmetallischen Material bestehen und daß das Filterscheibenpaket als ein durch Zusammendrücken der Filterscheiben (22) und der Abstandsringe (23 ,24) zusammenhaltendes, ohne äußeres oder inneres Stützrohr bestehendes, selbsttragendes Bauelement ausgebildet ist.

2. Flüssigkeitsfilter nach Anspruch 1, dadurch gekennzeichnet, daß an den äußeren Abstandsringen (23) seitlich neben den Durchgängen (29) radial nach außen ragende Nasen (31) angeordnet sind, welche die Mantelfläche (32) im Abstand von der Innenwand des Gehäuses (11) halten.

3. Flüssigkeitsfilter nach Anspruch 1 oder 2, dadurch gekennzeichnet, daß die Breite der Abstandsringe (23, 24) in radialer Richtung etwa das Doppelte der Dicke der Abstandsringe (23, 24) in axialer Richtung beträgt.

4. Flüssigkeitsfilter nach einem oder mehreren der Ansprüche 1 bis 3, dadurch gekennzeichnet, daß die Filterscheiben (22) und die Abstandsringe (23, 24) kreisförmig ausgebildet sind und insbesondere aus Papier bestehen.

5. Flüssigkeitsfilter nach einem oder mehreren der Ansprüche 1 bis 4, dadurch gekennzeichnet, daß die Filterscheiben und die äußeren Abstandsringe an ihrem Umfang die Form eines regelmäßigen Vielecks aufweisen, wobei die Zahl der Ecken insbesondere zwischen 4 und 8 liegt.

6. Flüssigkeitsfilter nach einem oder mehreren der Ansprüche 1 bis 5 mit einem aus Gehäusetopf (12) und Gehäusedeckel (13) bestehenden Gehäuse (11), dadurch gekennzeichnet, daß ein am Boden (14) des Gehäusetopfes (12, 51) anliegendes Federelement (43, 44; 55) den Filtereinsatz (19) mit seiner oberen starren Endplatte (26) dichtend gegen den Gehäusedeckel (13; 52) drückt.

7. Flüssigkeitsfilter nach einem der Ansprüche 1 bis 6, dadurch gekennzeichnet, daß die inneren, übereinander gestapelten Abstandsringe (24) ein durchlochtes, den Ablaufkanal (35) formendes Mittelrohr bilden.

## Claims

1. Fluid filter, particularly for fuels, having a filter insert (19) located in a casing (11), in which individual filter discs (22) are joined together in stack form in the manner of a cell filter by alternate interleaving of an outer distance ring (23) and an inner distance ring (24) and in which are located rigid end panels (25, 26) arranged at both ends of the filter disc pack, a plurality of passages (29), communicating with a supply opening (15), being located on the outer surface (32) of the filter disc pack, which passages (29) are connected by the filter discs (22) and the inner distance rings (24) to a central outlet duct (35) entering an outlet opening (18), and having a device holding the filter discs (22) and the distance rings (23, 24) together in the axial direction, and in the case of which distance rings (23, 24) the two contact surfaces (27, 28) located on opposite sides to one another are designed without interruption continuously with a smooth surface and the passages (29) are designed to be of perforation type, and in which the outer distance rings (23) and the inner distance rings (24) are equally thick and the filter discs (22) of thin-walled filter material are clamped, so as to be self-supporting, by means of their outer and inner edges between the outer and the inner distance rings (23, 24), characterised in that the inner and outer distance rings (23, 24) each have a rectangular cross-section whose longer sides are associated with the contact surfaces (27, 28), in that the distance rings (23, 24) consist of a non-metallic material and in that the filter disc pack is designed as a self-supporting constructional element, without outer or inner support tube, held together by pressing together the filter discs (22) and the distance rings (23, 24).

**2.** Fluid filter according to Claim 1, characterised in that lugs (31) protruding radially outwards are located at the side next to the passages (29) on the outer distance rings (23), which lugs hold the outer surface (32) at a distance from the inner wall of the casing (11).

**3.** Fluid filter according to Claim 1 or 2, characterised in that the width of the distance rings (23, 24) in the radial direction is approximately double the thickness of the distance rings (23, 24) in the axial direction.

**4.** Fluid filter according to one or more of Claims 1 to 3, characterised in that the filter discs (22) and the distance rings (23, 24) are designed to be circular and consist, in particular, of paper.

**5.** Fluid filter according to one or more of Claims 1 to 4, characterised in that the periphery of the filter discs and the outer distance rings has the shape of a regular polygon, the number of corners being, in particular, between four and eight.

**6.** Fluid filter according to one or more of Claims 1 to 5 having a casing (11) consisting of casing body (12) and casing cover (13), characterised in that a spring element (43, 44; 55) in contact with the bottom (14) of the casing body (12, 51) presses the upper rigid end panel (26) of the filter insert (19) in a sealing manner against the casing cover (13; 52).

**7.** Fluid filter according to one of Claims 1 to 6, characterised in that the inner distance rings (24) stacked one above the other form a perforated central tube making up the outlet duct (35).

**Revendications**

**1.** Filtre pour liquides, notamment pour combustibles, avec une partie opérationnelle de filtre (19) disposée dans un carter (11), dans laquelle des disques de filtration individuels (22) sont assemblés à la façon d'un filtre cellulaire par empilage en interposant alternativement un anneau externe d'écartement (23) ou un anneau interne d'écartement (24), et dans laquelle des plaques terminales rigides (25, 26) sont placées aux deux extrémités du paquet de disques de filtration, tandis que sur la surface enveloppe externe (32) du paquet de disques de filtration se trouvent plusieurs passages (29) communiquant avec une ouverture d'arrivée (15), qui à travers les disques de filtration (22) et les anneaux internes d'écartement (24) communiquent avec un canal central d'évacuation (35) débouchant dans une ouverture d'évacuation (18), et avec un dispositif maintenant ensemble en direction axiale les disques de filtration (22) et les disques d'écartement (23, 24), tandis que dans ces anneaux d'écartement (23, 24) les côtés opposés l'un à l'autre comportent deux surfaces d'appui (27, 28) s'étendant en continu avec des surfaces lisses et que les passages (29) sont en forme de trous, et les anneaux externes d'écartement (23) et les anneaux internes d'écartement (24) ont la même épaisseur et les disques de filtration (22) en matériau de filtration à paroi mince sont serrés par leurs bords externe et interne sans être soutenus entre les anneaux d'écartement externes et internes (23, 24), filtre pour liquides caractérisé en ce que les anneaux d'écartement internes et externes (23, 24) comportent respectivement une section transversale rectangulaire dont les côtés les plus longs sont associés aux surfaces d'appui (27, 28), en ce que les anneaux d'écartement (23, 24) sont constitués par un matériau non métallique, et en ce que le paquet de disques de filtration est réalisé sous la forme d'un élément de construction auto-porteur, ne comportant pas de tubes de support externe ou interne, et dont la cohésion est maintenue par la pression d'assemblage des disques de filtration (22) et des anneaux d'écartement (23, 24).

**2.** Filtre pour liquides selon la revendication 1, caractérisé en ce que des taquets (31) faisant saillie radialement vers l'extérieur sont disposés latéralement à côté des passages (29) sur les anneaux externes d'écartement (23), et maintiennent la surface enveloppe (32) à une certaine distance de la paroi interne du carter (11).

**3.** Filtre pour liquides selon la revendication 1 ou la revendication 2, caractérisé en ce que la largeur des anneaux d'écartement (23, 24) en direction radiale, est d'environ le double de l'épaisseur de ces anneaux d'écartement (23, 24) en direction axiale.

**4.** Filtre pour liquides selon une ou plusieurs des revendications 1 à 3, caractérisé en ce que les disques de filtration (22) et les anneaux d'écartement (23, 24) sont de forme circulaire et sont notamment en papier.

**5.** Filtre pour liquides selon une ou plusieurs des revendications 1 à 4, caractérisé en ce que les disques de filtration et les anneaux externes d'écartement, ont à leurs périphéries la forme d'un polygone régulier dont le nombre de côtés se situe notamment entre quatre et huit.

6. Filtre pour liquides selon une ou plusieurs des revendications 1 à 5, avec un carter (11) constitué par un pot de carter (12) et un couvercle de carter (13), caractérisé en ce qu'un élément élastique (43, 44; 55) s'appliquant sur le fond (14) du pot (12, 51) du carter, presse de façon étanche la partie opérationnelle du filtre (19) avec sa plaque terminale supérieure rigide (26) contre le couvercle (13; 52) du carter.

7. Filtre pour liquides selon une des revendications 1 à 6, caractérisé en ce que les anneaux d'écartement internes (24), empilés les uns sur les autres, constituent un tube médian perforé formant le canal d'évacuation (35).

FIG.1

FIG.2

FIG.3

FIG.4

FIG.5